Europäisches Patentamt

European Patent Office

Office européen des brevets

(11) Numéro de publication : **0 424 212 B1**

## (12) FASCICULE DE BREVET EUROPEEN

(45) Date de publication du fascicule du brevet :
**20.07.94 Bulletin 94/29**

(21) Numéro de dépôt : **90402808.1**

(22) Date de dépôt : **09.10.90**

(51) Int. Cl.⁵ : **H04Q 7/04**

---

(54) **Radiotéléphone.**

---

(30) Priorité : **18.10.89 FR 8913597**

(43) Date de publication de la demande :
**24.04.91 Bulletin 91/17**

(45) Mention de la délivrance du brevet :
**20.07.94 Bulletin 94/29**

(84) Etats contractants désignés :
**AT BE CH DE DK ES FR GB GR IT LI LU NL SE**

(56) Documents cités :
**EP-A- 0 008 416**
**EP-A- 0 051 332**
**FR-A- 2 613 562**
**GB-A- 2 151 885**
**US-A- 4 680 787**

(56) Documents cités :
**ELECTRONIC DESIGN. no. 9, 27 avril 1989,**
**HASBROUCK HEIGHTS, N, page 135; D.MALI-**
**NIAK: "CHIP SET FOR CELLULAR PHONES**
**CUTS COMPONENT COUNT BY 60%"**

(73) Titulaire : **SOCIETE D'APPLICATIONS**
**GENERALES D'ELECTRICITE ET DE**
**MECANIQUE SAGEM**
**6, Avenue d'Iéna**
**F-75783 Paris Cédex 16 (FR)**

(72) Inventeur : **Manac'h, Stéphane**
**18 Allée des Martinets**
**F-78510 Triel S/Seine (FR)**

(74) Mandataire : **Bloch, Gérard et al**
**2, square de l'Avenue du Bois**
**F-75116 Paris (FR)**

**EP 0 424 212 B1**

## Description

Un radiotéléphone mobile est un appareil téléphonique, à la disposition d'un usager en déplacement, généralement dans un véhicule, pouvant être relié à un central téléphonique par voie hertzienne VHF ou UHF. Un radiotéléphone mobile comporte, schématiquement, une unité centrale, aujourd'hui à microprocesseur, un combiné téléphonique et un support de combiné. Le combiné peut être un combiné détachable de l'unité centrale, c'est-à-dire que son support peut être détaché de l'unité centrale, en être éloigné et y être relié par exemple par câble. L'intérêt des radiotéléphones à combiné détachable est de pouvoir équiper une flotte de véhicules, chacun d'une même unité centrale standard, les conducteurs pouvant à volonté changer de véhicule en emportant leur combiné personnalisé.

Un radiotéléphone comporte en effet un module de personnalisation dans lequel sont stockées des informations propres à l'usager, comme le numéro d'appel, le type d'abonnement, la zone de couverture, les numéros appelés, les durées et le cumul des temps de communication, la table des numérotations abrégées, etc.

Ainsi, en cas de changement d'affectation de véhicule, il suffit que l'usager, le chauffeur, débranche son combiné de l'unité centrale du véhicule dont il avait précédemment la charge pour le rebrancher sur l'unité centrale du véhicule qui lui est nouvellement attribué.

L'autre intérêt du combiné détachable est de pouvoir éloigner l'unité centrale du support de combiné dans un véhicule et, par exemple, de placer l'unité centrale dans le coffre du véhicule et le support du combiné près du siège du conducteur.

Dans les premiers radiotéléphones à combiné non détachable, le module de personnalisation était implanté dans l'unité centrale, les échanges d'informations entre le microprocesseur de contrôle et de gestion des communications téléphoniques et le module de personnalisation, et plus particulièrement une mémoire RAM à accès parallèles, s'effectuant par un bus de liaisons parallèles.

Par le document FR-A-2 613 562, on connait un radiotéléphone à combiné détachable, dans lequel le module de personnalisation est implanté dans le support de combiné. Pour la mise au point de ce radiotéléphone, il a apparemment été fait le choix suivant. La mémoire de personnalisation est une mémoire vive RAM, à accès parallèles, donc associée, pour pallier les défaillances de l'alimentation autonome, à un circuit de sauvegarde de ses informations contenant une pile. Notamment pour limiter le nombre de contacts des connecteurs, les bus de données et d'adresses entre le microprocesseur et la mémoire sont des bus série et à la mémoire de personnalisation sont donc aussi associés des circuits de déserialisation et de serialisation, en l'occurrence des registres à décalage à entrée série et sorties parallèles, vers la mémoire, ou à entrées parallèles et sortie série, vers le microprocesseur. De même, les informations sont échangées entre le module de personnalisation et le combiné téléphonique par un bus série dans le cordon téléphonique. C'est d'ailleurs très certainement en raison de ces choix technologiques que le module de personnalisation du radiotéléphone du document FR-A-2 613 562 a été implanté dans le support du combiné.

Or ces choix technologiques nécessitent un grand nombre de composants logiques qui sont d'un poids global élevé et qui finalement conduisent à un prix de revient élevé du radiotéléphone.

La demanderesse a donc cherché à proposer un radiotéléphone sans ces inconvénients.

A cet effet, elle a eu l'idée d'adopter, comme mémoire de personnalisation, une mémoire ne nécessitant pas d'alimentation pour conserver les données qui y ont été écrites, en l'espèce une mémoire EEPROM, et d'utiliser, comme bus de liaison, de données, d'une part, d'horloge, d'autre part, des bus série à collecteur ouvert, c'est-à-dire comportant à chaque extrémité un transistor à collecteur ouvert, du type I²C enseigné par le document EP-A-0 051 332 et qui présente, entre autres, la particularité selon laquelle n'importe quel émetteur peut forcer les fils de données et d'horloge au niveau 0, avec pour avantage de permettre les échanges dans les deux sens sur un même fil et de pouvoir, en cas de besoin, régler des conflits.

Naturellement, en combinaison avec ces bus I²C doivent être utilisés des composants aussi du type I²C. Le système I²C est caractérisé globalement au plan structurel, notamment par ce transistor à collecteur ouvert en extrémité de bus, au plan logiciel, par un protocole d'échanges particulier, toutes ces caractéristiques étant parfaitement définies dans le document EP-A-0 051 332.

Cependant, la demanderesse s'est aperçue qu'un bus I²C ne pouvait pas convenir pour une liaison entre une unité centrale de radiotéléphone et un module de personnalisation par trop éloigné de cette unité centrale, en raison de la capacité répartie de la liaison qui, par intégration, altère les fronts des transitions binaires qui ne respectent alors plus les normes I²C.

C'est alors que la demanderesse a développé son invention.

La présente invention concerne un radiotéléphone comportant une unité centrale à microprocesseur, un combiné téléphonique détachable éloigné de l'unité centrale et raccordé à celle-ci par un cordon de liaison, et un module de personnalisation, radiotéléphone caractérisé par le fait que deux quelconques des différents

2

composants de l'unité centrale forment une paire d'un composant émetteur/récepteur maitre et d'un composant récepteur/émetteur asservi interconnectés par un fil de bus de données et un fil de bus d'horloge, chaque fil de bus est pourvu de moyens logiques agencés pour former une fonction logique câblée entre les niveaux de tension qui désignent respectivement une première et une seconde valeur logique qui sont transmises par les composants de la paire considérée, le niveau de tension sur chacun des deux fils de bus pouvant être porté à la première valeur logique par l'un ou l'autre des deux composants présentant cette première valeur logique au fil considéré, masquant tout signal de la seconde valeur logique pouvant être présenté au même fil, le microprocesseur est connecté aux composants de l'unité centrale par un circuit prédiffusé relié à un fil de bus de données par un transistor d'entrée/sortie à collecteur ouvert et à un fil de bus d'horloge par un transistor d'entrée/sortie, le module de personnalisation comporte une mémoire non volatile reprogrammable agencée comme les composants de l'unité centrale, le module de personnalisation est connecté au circuit prédiffusé par une ligne à quatre fils ordinaires dans le cordon de liaison, deux fils de données et deux fils d'horloge respectivement pour l'émission et la réception et la ligne quadrifilaire est reliée à la mémoire de personnalisation par une première interface d'adaptation et au circuit prédiffusé par une seconde interface qui est agencée pour que la mémoire de personnalisation, pour le circuit prédiffusé, soit virtuellement en parallèle sur les fils de bus de ce circuit prédiffusé.

Ainsi, pour le microprocesseur de l'unité centrale ainsi que pour son logiciel, la mémoire de personnalisation se comporte comme tout autre composant de l'unité centrale. Dans ces conditions, la mémoire de personnalisation peut être implantée soit dans le combiné téléphonique, soit dans un support de combiné et le cordon de liaison, entre le combiné, d'une part, et l'unité centrale, d'autre part, peut avoir n'importe quelle longueur.

Dans la forme de réalisation préférée du radiotéléphone de l'invention, les collecteurs des transistors des bus de données et d'horloge du circuit prédiffusé sont reliés, chacun, à l'une des entrées d'une porte AND reliée, par sa sortie, à une entrée du circuit prédiffusé, l'autre entrée de la porte AND étant reliée au fil de données, respectivement d'horloge, d'émission de la mémoire de personnalisation et les fils de données et d'horloge de réception de la mémoire de personnalisation sont reliés respectivement aux fils de bus de données et d'horloge du circuit prédiffusé.

Avantageusement, le collecteur des transistors des bus de données et d'horloge du circuit prédiffusé est relié à l'entrée de la porte AND associée par un amplificateur intermédiaire.

De préférence encore, la mémoire de personnalisation du radiotéléphone de l'invention est une mémoire EEPROM, effaçable par application d'un champ électrique, de préférence toujours à accès série, qui est alors un composant à huit broches de faible encombrement.

Bref, en utilisant une mémoire de personnalisation qui ne perd pas ses informations lors d'une coupure de l'alimentation, qui est peu encombrante, qui est un composant du système $I^2C$ du document EP-A-0 051 332, qui est reliée au microprocesseur par une liaison virtuelle pour cet élément microprocesseur, la demanderesse a inventé un radiotéléphone perfectionné dont le module de personnalisation peut être facilement logé dans le combiné téléphonique ou son support, ce combiné et son support pouvant au demeurant être éloignés à volonté de l'unité centrale du radiotéléphone.

En outre, la mémoire de personnalisation pourrait même être disposée dans l'unité centrale en étant reliée directement au circuit prédiffusé sans interface d'adaptation.

Avantageusement, le radiotéléphone de l'invention comprend un compteur en anneau avec un registre à décalage bouclé sur les deux fils d'horloge ordinaires du cordon de liaison, grâce à quoi la fréquence d'horloge est adaptée à la bande passante de la liaison entre l'unité centrale et le combiné.

L'invention sera mieux comprise à l'aide de la description suivante de la forme de réalisation préférée du radiotéléphone de l'invention, en référence aux dessins annexés, sur lesquels

- la figure 1 représente une vue schématique du radiotéléphone de l'invention;
- la figure 2 représente une vue schématique de l'unité centrale du radiotéléphone de la figure 1;
- la figure 3 représente une vue schématique de l'interface de liaison de la mémoire de personnalisation à l'unité centrale du radiotéléphone de la figure 1 et
- la figure 4 représente schématiquement l'horloge d'adressage et de synchronisation du radiotéléphone de la figure 1.

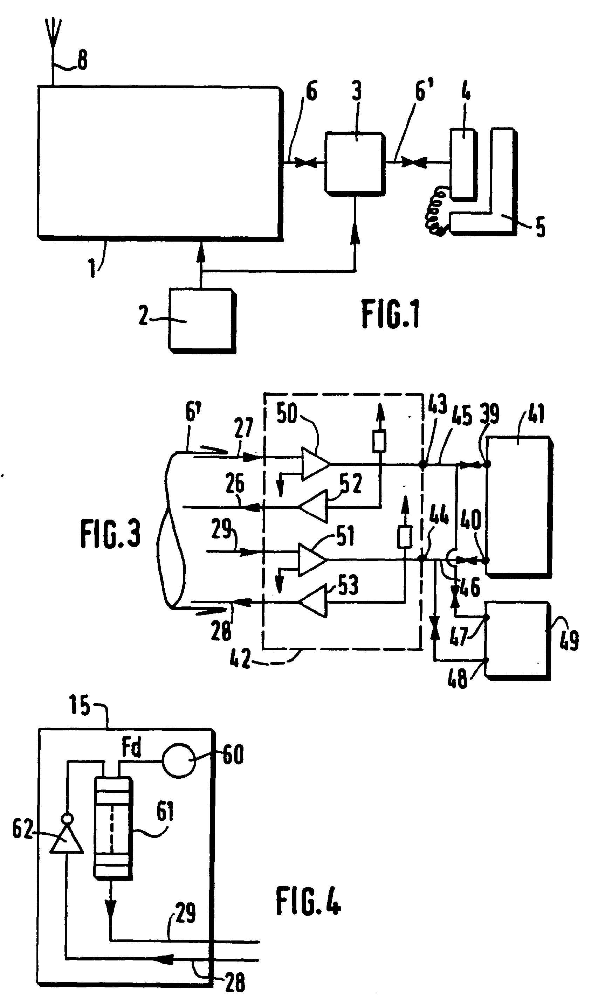

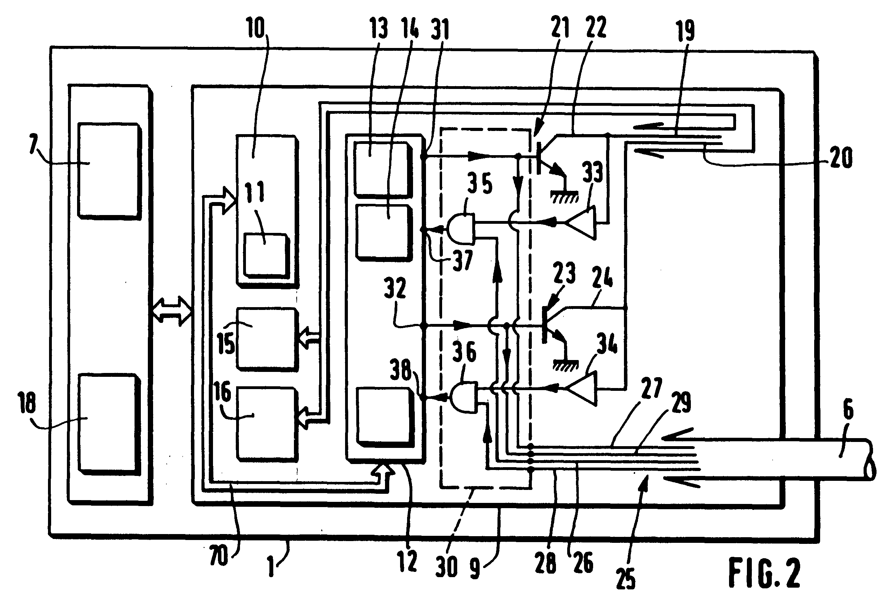

De façon classique, et en référence à la figure 1, le radiotéléphone, qui va être décrit en détails ci-après, mais dans ses seuls éléments et composants propres à l'invention, comporte une unité centrale 1, une source d'alimentation 2, un boîtier de connexion 3 et un combiné 4 et son support 5. En fonctionnement, l'ensemble combiné-support est détaché et éloigné de l'unité centrale 1 à laquelle il est relié par un cordon 6, 6' et le boîtier 3. L'unité centrale 1 est alimentée en énergie par la source 2, en l'occurrence une batterie, de même que l'ensemble combiné 4-support 5, par l'intermédiaire du boîtier de connexion 3 et du cordon 6'.

L'unité centrale, toujours de façon classique, comporte des circuits d'émission-réception 7, avec une antenne 8, et, ici, des circuits 18 de conversion analogique-numérique et numérique-analogique (figure 2).

En ce qui concerne les éléments classiques du radiotéléphone, le terme "composant" étant réservé aux éléments 12C de la carte de gestion 9 qui va être abordée plus loin, il est inutile de les décrire plus avant, l'homme du métier en ayant une parfaite connaissance. A la rigueur peut-on renvoyer le lecteur de la présente demande à l'abondante littérature publiée sur le sujet, à commencer par le document FR-A-2 613 562, évoqué ci-dessus, et, par exemple, l'article de "Telcom Report, vol 9, numéro spécial, Nachrichtenübertragung auf Funkwegen, 1986, pages 313-318, Munich, DE; F. Becker et al : Die Mobilstation im Spannungsfeld von Innovation, Rationalisierung und technischen Auforderungen".

L'unité centrale 1 comporte une carte de gestion 9, sur laquelle sont implantés des composants I²C reliés entre eux par des bus de données et d'horloge particuliers et entre lesquels les échanges s'effectuent selon un protocole également particulier, les particularités de ces bus et de ce protocole étant celles qui sont clairement définies dans le document EP-A-0 051 332. Le système I²C a été inventé et mis au point par la Société N.V. Philips'Gloeilampenfabrieken et compte-tenu de la description qui en est donnée dans ce document, on renverra purement et simplement ici aussi le lecteur de la présente demande à ce document.

L'unité centrale comporte un microprocesseur 10, avec son logiciel, illustré en 11 sur la figure 2, qui définit une partie du protocole d'échange I²C, l'autre partie de ce protocole étant définie par un circuit prédiffusé dans un substrat 12 relié au microprocesseur par un bus parallèle 70. Ce circuit comporte, notamment, un générateur 13 de la fonction I²C, un générateur 14 de la fonction chien de garde, pour couper le radiotéléphone en cas de non réalisation de certaines conditions et, par exemple, en cas de panne, ne pas perturber le réseau.

Sur la carte 9 sont aussi implantées une horloge d'adressage et de synchronisation 15 et un circuit d'attente musicale 16.

Le microprocesseur 10 est connecté aux autres composants de la carte 9 ainsi qu'aux autres éléments de l'unité centrale 1 par le bus 70 et le circuit prédiffusé 12 lui-même relié à un fil de bus de données I²C 19 et un fil de bus d'horloge I²C 20. A l'extrémité de liaison au circuit 12, le fil de bus de données 19 est relié à un transistor d'entrée/sortie 21 à collecteur 22 ouvert. A l'extrémité de liaison au circuit 12, le fil de bus d'horloge 20 est relié à un transistor d'entrée/sortie 23 à collecteur 24 ouvert.

Le cordon 6, 6' de liaison du combiné-support à l'unité centrale comporte notamment une ligne ordinaire quadrifilaire 25 reliée au circuit prédiffusé 12, deux fils de données 26, 27 pour l'émission et la réception, le fil 26 entrant sur le circuit 12 et le fil 27 en sortant, et deux fils d'horloge 28, 29 pour l'émission et la réception, le fil 28 entrant sur le circuit 12 et le fil 29 en sortant.

La ligne 25 est en fait reliée au circuit prédiffusé par une interface 30.

Les émetteurs des transistors 21, 23 sont reliés à la masse et leurs bases respectivement à deux bornes d'entrée/sortie 31, 32 du circuit prédiffusé 12. Les bases des transistors 21, 23 sont respectivement reliées aux fils 27, 29 de la ligne 25. Les collecteurs 22, 24 des transistors 21, 23 sont respectivement reliés, par des amplificateurs 33, 34, à des premières entrées de deux portes AND 35, 36, les secondes entrées de ces portes AND étant reliées aux fils 26, 28. Quand aux sorties des portes 35, 36, elles sont reliées respectivement à deux bornes d'entrée 37, 38 du circuit 12.

Le multipole, comprenant les portes AND 35, 36, entre les bornes 31, 32, 37, 38, du côté du circuit 12, et les bases des transistors 21, 23, du côté des fils de bus de données et d'horloge I²C 19, 20, forme l'interface de liaison 30 entre la ligne quadrifilaire ordinaire 25 et le circuit prédiffusé 12.

A l'autre bout de la ligne 25, dans le cordon 6', les deux paires de fils 26, 27 et 28, 29 sont reliées respectivement à deux bornes d'entrée/sortie 39, 40 d'un module de personnalisation constitué d'une mémoire EEPROM 41, de type I²C, par une interface 42. Plus précisément, les bornes 39, 40 de la mémoire EEPROM 41 sont respectivement reliées à deux bornes d'entrée/sortie 43, 44 par un fil de bus de données I²C 45 et par un fil de bus d'horloge I²C 46. Aux bornes 43, 44 de l'interface 42 sont également reliées deux bornes d'entrée/sortie 47, 48 d'un microcontrôleur 49.

La mémoire 41, le microcontrôleur 49 et l'interface 42 sont logés dans le combiné 4 du radiotéléphone, le microcontrôleur 49 assurant notamment la gestion d'un clavier, d'un afficheur, et, ici, de circuits d'écriture-lecture dans la mémoire 41.

La ligne 27 entre, dans l'interface 42, sur l'une des bornes d'entrée d'un comparateur 50 de recréation de la fonction I²C, avec, en sortie, un transistor à collecteur ouvert. De même, la ligne 29 entre, dans l'interface 42, sur l'une des bornes d'entrée d'un comparateur 51 de recréation de la fonction I²C, avec, en sortie, un transistor à collecteur ouvert. Les fils I²C 45, 46 sont raccordés au fils ordinaires 26, 28 par deux amplificateurs 52, 53. Ainsi, l'interface 42 assure une fonction d'adaptation de la ligne quadrifilaire ordinaire 26-29 au module de personnalisation I²C 41.

Dans ces conditions, la mémoire de personnalisation 41, pour le circuit prédiffusé 12, est connectée en parallèle sur les fils de bus de données 19 et l'horloge 20 du circuit prédiffusé 12 et se comporte comme tout autre composant I²C de l'unité centrale 1.

Le radiotéléphone qui vient d'être décrit, et qui est de type mobile, présente l'avantage d'avoir un module de personnalisation intégré à son combiné. Dans le cas d'un radiotéléphone portable, avec un combiné sans support, le boîtier de connexion 3 serait supprimé.

En outre, les transistors 21, 23 et l'interface 30 pourraient être ainsi diffusés sur le substrat 12. Quant à l'écriture-lecture de la mémoire 41 du combiné 4, elle pourrait s'effectuer depuis l'unité centrale 1 par l'intermédiaire du circuit du substrat 12.

La liaison entre l'unité centrale 1 et le combiné 4 s'effectue sur une longue distance. La capacité répartie de cette liaison, déjà évoquée plus haut, en modifie la bande passante si bien que des échanges à fréquence trop élevée pourraient être par trop altérés. Le radiotéléphone de l'invention ne présente toutefois pas ce risque, en adaptant la fréquence d'horloge à la bande passante de la liaison entre l'unité centrale et le combiné.

Il est connu d'adopter, comme horloge 15, un compteur dit en anneau comprenant un registre à décalage décalé à une fréquence prédéterminée $F_d$.

Considérons par exemple un registre à quatre sorties qui, au départ, sont respectivement dans l'état 0000. Au premier top de décalage, l'état des sorties du registre est 1000, au second top, il est 1100, au troisième top, 1110, au quatrième top, 1111 et ainsi de suite.

La quatrième et dernière sortie du registre fournit donc un signal de la forme

$$O\ \ O\ \ O\ \ O\ \ \ 1\ \ 1\ \ 1\ \ 1\ \ \ O\ \ O\ \ O\ \ O\ \ \ 1\ \ .....$$

soit un signal à fréquence

$$F_H = \frac{F_d}{4}$$

Si on boucle les fils d'horloge sortant 29 et entrant 28 sur le registre à décalage et si la capacité répartie de la liaison 25 introduit, par exemple, un retard d'un top, c'est comme si le registre à décalage avait, pour les niveaux haut non pas quatre, mais cinq positions avec, en sortie, le signal

$$O\ \ O\ \ O\ \ O\ \ \ 1\ \ 1\ \ 1\ \ 1\ \ 1\ \ \ O\ \ O\ \ O\ \ O\ \ \ 1\ \ .....$$

de fréquence plus basse que le signal théorique. En d'autres termes, boucler les fils d'horloge entrant et sortant sur un compteur en anneau revient à adapter la fréquence d'horloge à la bande passante de la liaison ordinaire entre l'unité centrale et le combiné.

Si l'on avait voulu obtenir pour les deux niveaux haut et bas cinq positions, il eut suffi de ne relier le fil de bus d'horloge 20 qu'au collecteur 24 du transistor 23, plus nécessairement à collecteur ouvert, de supprimer l'amplificateur 34 et la porte AND 36 et de relier directement le fil 28 au circuit du substrat 12.

Plus généralement, un compteur en anneau fournit une fréquence d'horloge

$$F_H = \frac{F_d}{n},$$

n étant le nombre de sorties du registre à décalage et $F_d$ la fréquence de décalage. Si la liaison ordinaire introduit un décalage de m tops sur les deux niveaux, la fréquence d'horloge est modifiée en

$$F'_H = \frac{F_d}{n + m}$$

En conséquence, l'horloge 15 du radiotéléphone comporte un générateur de fréquence 60 fournissant un signal rectangulaire de fréquence $F_d$, assurant le décalage, à cette fréquence $F_d$, d'un registre à décalage 61 raccordé, en sortie, à la ligne ordinaire d'horloge sortante 29 et, en entrée, à la ligne ordinaire d'horloge entrante 28 par l'intermédiaire d'un inverseur 62.

**Revendications**

1. Radiotéléphone comportant une unité centrale (1) à microprocesseur (10), un combiné téléphonique (4) détachable éloigné de l'unité centrale et raccordé à celle-ci par un cordon de liaison (6, 6'), et un module de personnalisation (41), radiotéléphone caractérisé par le fait que deux quelconques des différents composants de l'unité centrale (1) forment une paire d'un composant émetteur/récepteur maitre et d'un composant récepteur/émetteur asservi interconnectés par un fil de bus de données (19) et un fil de bus d'horloge (20), chaque fil de bus est pourvu de moyens logiques (21, 23) agencés pour former une fonction logique câblée entre les niveaux de tension qui désignent respectivement une première et une seconde valeur logique qui sont transmises par les composants de la paire considérée, le niveau de tension sur chacun des deux fils de bus pouvant être porté à la première valeur logique par l'un ou l'autre des deux composants présentant cette première valeur logique au fil considéré, masquant tout signal de la seconde valeur logique pouvant être présenté au même fil, le microprocesseur (10) est connecté aux composants de l'unité centrale (1) par un circuit prédiffusé (12) relié à un fil de bus de données (19) par un transistor d'entrée/sortie (21) à collecteur (22) ouvert et à un fil de bus d'horloge (20) par un transistor d'entrée/sortie (23), le module de personnalisation (41) comporte une mémoire non volatile reprogrammable agencée comme les composants de l'unité centrale (1), le module de personnalisation est connecté au circuit prédiffusé par une ligne (25) à quatre fils ordinaires dans le cordon de liaison, deux fils de données (26, 27) et deux fils d'horloge (28, 29) respectivement pour l'émission et la réception et la ligne quadrifilaire (25) est reliée à la mémoire de personnalisation (41) par une première interface d'adaptation (42) et au circuit prédiffusé (12) par une seconde interface (30) qui est agencée pour que la mémoire de personnalisation (41), pour le circuit prédiffusé (12), soit virtuellement en parallèle sur les fils de bus (19, 20) de ce circuit prédiffusé (12).

2. Radiotéléphone selon la revendication 1, dans lequel la mémoire de personnalisation (41) est implantée dans le combiné (4).

3. Radiotéléphone selon l'une des revendications 1 et 2, dans lequel la mémoire de personnalisation (41) est une mémoire EEPROM.

4. Radiotéléphone selon l'une des revendications 1 à 3, dans lequel les collecteurs (22, 24) des transistors (21, 23) des bus de données (19) et d'horloge (20) du circuit prédiffusé (12) sont reliés, chacun, à l'une des entrées d'une porte AND (35, 36) reliée, par sa sortie, à une entrée (37, 38) du circuit prédiffusé (12), l'autre entrée de la porte AND (35, 36) étant reliée au fil de données (26),respectivement d'horloge (28), d'émission de la mémoire de personnalisation (41) et les fils de données (27) et d'horloge (29) de réception de la mémoire de personnalisation (41) sont reliées respectivement aux fils de bus de données (19) et d'horloge (20) du circuit prédiffusé.

5. Radiotéléphone selon la revendication 4, dans lequel le collecteur (22, 24) des transistors (21, 23) des bus de données et d'horloge (19, 20) du circuit prédiffusé (12) est relié à l'entrée de la porte AND (35, 36) associée par un amplificateur intermédiaire (33, 34).

6. Radiotéléphone selon l'une des revendications 1 à 3, dans lequel le collecteur (22) du transistor (21) du bus de données (19) du circuit prédiffusé (12) est relié à l'une des entrées d'une porte AND (35) reliée, par sa sortie, à une entrée (37) du circuit prédiffusé (12), l'autre entrée de la porte AND (35) étant reliée au fil de données (26) d'émission de la mémoire de personnalisation (41) et les fils de données (27) et d'horloge (29) de réception de la mémoire de personnalisation (41) sont reliées respectivement aux fils de bus de données (19) et d'horloge (20) du circuit prédiffusé.

7. Radiotéléphone selon la revendication 6, dans lequel le collecteur (22) du transistor (21) du bus de données (19) du circuit prédiffusé (12) est relié à l'entrée de la porte AND (35) associée par un amplificateur intermédiaire (33).

8. Radiotéléphone selon l'une des revendications 1 à 7, dans lequel il est prévu une horloge (15) comportant un compteur en anneau avec un registre à décalage (61) bouclé sur les deux fils d'horloge ordinaires (28, 29) du cordon de liaison (6, 6').


**Patentansprüche**

1. Funktelefon, umfassend eine Zentraleinheit (1) mit einem Mikroprozessor (10), einen abnehmbaren Telefon-Handapparat (4), der von der Zentraleinheit entfernt ist und an dieser mittels einer Verbindungsschnur (6, 6') angeschlossen ist, und einen Personalisierungsmodul (41), ein Funktelefon, dadurch gekennzeichnet, daß zwei der verschiedenen Komponenten der Zentraleinheit (1) ein Paar einer Sende/Empfangs-Hauptkomponente und einer gesteuerten Sende/Empfangskomponente bilden, die durch eine Datenbusleitung (19) und eine Taktgeberbusleitung (20) zusammengeschaltet sind, wobei jede Busleitung mit logischen Mitteln (21, 23) versehen ist, dafür vorgesehen, eine logische Funktion zu bilden, die zwischen den Spannungspegeln verdrahtet ist, welche jeweils einen ersten und einen zweiten logischen Wert bezeichnen, die von den Komponenten des betreffenden Paares übertragen werden, wobei der Spannungspegel an jeder der zwei Busleitungen durch die eine oder die andere der beiden Komponenten, welche der betreffenden Leitung diesen ersten logischen Wert anbietet, auf den ersten logischen Wert gebracht werden kann und dabei jedes Signal mit dem zweiten logischen Wert, das derselben Leitung angeboten werden kann, maskiert wird, der Mikroprozessor (10) mit den Komponenten der Zentraleinheit (1) durch einen Vordiffusions-Schaltkreis (12) verbunden ist, der durch einen Eingangs/Ausgangstransistor (21) mit offenem Kollektor (22) mit einer Datenbusleitung (19) und durch einen Eingangs/Ausgangstransistor (23) mit einer Taktgeberbusleitung (20) verbunden ist, der Personalisierungsmodul (41) einen wiederholt programmierbaren nichtflüchtigen Speicher umfaßt, der wie die Komponenten der Zentraleinheit (1) strukturiert ist, der Personalisierungsmodul durch eine in der Verbindungsschnur befindliche Leitung (25) mit vier gewöhnlichen Adern, zwei Datenadern (26, 27) und zwei Taktgeberadern (28, 29) für das Senden bzw. den Empfang, an den Vordiffusions-Schaltkreis angeschlossen ist, und die vieradrige Leitung (25) mit dem Personalisierungsspeicher (41) durch eine erste Anpassungsschnittstelle (42) und mit dem Vordiffusions-Schaltkreis (12) durch eine zweite Schnittstelle (30) verbunden ist, die vorgesehen ist, damit der Personalisierungsspeicher (41), was den Vordiffusions-Schaltkreis (12) anbelangt, virtuell parallel auf den Busleitungen (19, 20) dieses Vordiffusions-Schaltkreises (12) anliegt.

2. Funktelefon nach Anspruch 1, bei dem der Personalisierungsspeicher (41) in den Handapparat (4) eingebaut ist.

3. Funktelefon nach einem der Ansprüche 1 und 2, bei dem der Personalisierungsspeicher (41) ein EEPROM ist.

4. Funktelefon nach einem der Ansprüche 1 bis 3, bei dem die Kollektoren (22, 24) der Transistoren (21, 23) des Daten- (19) und des Taktgeberbusses (20) des Vordiffusions-Schaltkreises (12) jeweils mit einem der Eingänge eines UND-Gatters (35, 36) verbunden sind, das mit seinem Ausgang mit einem Eingang (37, 38) des Vordiffusions-Schaltkreises (12) verbunden ist, wobei der andere Eingang des UND-Gatters (35, 36) mit der Sende-Datenader (26) bzw. der Sende-Taktgeberader (28) des Personalisierungsspeichers (41) und die Empfangs-Datenader (27) und Empfangs-Taktgeberader (29) des Personalisierungsspeichers (41) jeweils mit der Datenbus- (19) und der Taktgeberbusleitung (20) des Vordiffusions-Schaltkreises verbunden sind.

5. Funktelefon nach Anspruch 4, bei dem der Kollektor (22, 24) des Transistors (21, 23) des Daten- (19) und des Taktgeberbusses (20) des Vordiffusions-Schaltkreises (12) mit dem mit einem Zwischenverstärker (33, 34) assoziierten Eingang des UND-Gatters (35, 36) verbunden ist.

6. Funktelefon nach einem der Ansprüche 1 bis 3, bei dem der Kollektor (22) des Transistors (21) des Datenbusses (19) des Vordiffusions-Schaltkreises (12) mit einem der Eingänge eines UND-Gatters (35) verbunden ist, das mit seinem Ausgang mit einem Eingang (37) des Vordiffusions-Schaltkreises (12) verbunden ist, wobei- der andere Eingang des UND-Gatters (35) mit der Sende-Datenader (26) des Personalisierungsspeichers (41) verbunden ist, und die Empfangs-Datenader (27) und Empfangs-Taktgeberader (29) des Personalisierungsspeichers (41) jeweils mit der Datenbus- (19) und der Taktgeberbusleitung (20) des Vordiffusions-Schaltkreises verbunden sind.

7. Funktelefon nach Anspruch 6, bei dem der Kollektor (22) des Transistors (21) des Datenbusses (19) des Vordiffusions-Schaltkreises (12) mit dem mit einem Zwischenverstärker (33) assoziierten Eingang des UND-Gatters (35) verbunden ist.

8. Funktelefon nach einem der Ansprüche 1 bis 7, bei dem ein Taktgeber (15) vorgesehen ist, der einen Ringzähler mit einem Schieberegister (61) umfaßt, das über die zwei gewöhnlichen Taktgeberadern (28, 29) der Verbindungsschnur (6, 6') vernetzt ist.

## Claims

1. Radiotelephone comprising a central unit (1) having a microprocessor (10), a detachable telephone handset (4) remote from the central unit and connected to the latter by a connection cord (6, 6'), and a personalisation module (41), which radiotelephone is characterised by the fact that any two of the various components of the central unit (1) form a pair consisting of a transmitter/master receiver component and a receiver/servo-controlled transmitter component interconnected by a data bus wire (19) and a clock bus wire (20), each bus wire is provided with logic means (21, 23) arranged to form a logic function wired between the voltage levels which designate respectively a first and a second logic value which are transmitted by the components of the pair in question, the voltage level on each of the two bus wires being able to be brought to the first logic value by one or other of the two components having this first logic value on the wire in question, concealing any signal of the second logic value which may be presented on the same wire, the microprocessor (10) is connected to the components of the central unit (1) by a prediffused circuit (12) connected to a data bus wire (19) by an input/output transistor (21) having an open collector (22) and to a clock bus wire (20) by an input/output transistor (23), the personalisation module (41) comprises a reprogrammable non-volatile memory arranged as the components of the central unit (1), the personalisation module is connected to the prediffused circuit by a line (25) comprising four ordinary wires in the connecting cord, two data wires (26, 27) and two clock wires (28, 29) respectively for transmitting and receiving and the four-wire line (25) is connected to the personalisation memory (41) by a first adaptation interface (42) and to the prediffused circuit (12) by a second interface (30), which is arranged in order that the personalisation memory (41), for the prediffused circuit (12), is virtually in parallel with the bus wires (19, 20) of this prediffused circuit (12).

2. Radiotelephone according to Claim 1, in which the personalisation memory (41) is implanted in the handset (4).

3. Radiotelephone according to one of Claims 1 and 2, in which the personalisation memory (41) is an EEPROM memory.

4. Radiotelephone according to one of Claims 1 to 3, in which the collectors (22, 24) of the transistors (21, 23) of the data bus (19) and clock bus (20) of the prediffused circuit (12) are each connected to one of the inputs of an AND gate (35, 36) connected, by its output, to one input (37, 38) of the prediffused circuit (12), the other input of the AND gate (35, 36) being connected to the transmission data wire (26), respectively clock wire (28) of the personalisation memory (41) and the reception data wire (27) and clock wire (29) of the personalisation memory (41) are connected respectively to the data bus wire (19) and clock bus wire (20) of the prediffused circuit.

5. Radiotelephone according to Claim 4, in which the collector (22, 24) of the transistors (21, 23) of the data and clock buses (19, 20) of the prediffused circuit (12) is connected to the input of the associated AND gate (35, 36) by an intermediate amplifier (33, 34).

6. Radiotelephone according to one of Claims 1 to 3, in which the collector (22) of the transistor (21) of the data bus (19) of the prediffused circuit (12) is connected to one of the inputs of an AND gate (35) connected, by its output, to one input (37) of the prediffused circuit (12), the other input of the AND gate (35) being connected to the transmission data wire (26) of the personalisation memory (41) and the reception data wire (27) and clock wire (29) of the personalisation memory (41) are connected respectively to the data bus wire (19) and clock bus wire (20) of the prediffused circuit.

7. Radiotelephone according to Claim 6, in which the collector (22) of the transistor (21) of the data bus (19) of the prediffused circuit (12) is connected to the input of the associated AND gate (35) by an intermediate amplifier (33).

8. Radiotelephone according to one of Claims 1 to 7, in which a clock (15) is provided comprising a counter in a ring with a shift register (61) connected to the two ordinary clock wires (28, 29) of the connecting cord (6, 6').

FIG.1

FIG.3

FIG.4

FIG.2

EP 0 424 212 B1